# EUROPEAN PATENT SPECIFICATION

(11) **EP 4 078 192 B1**
(45) Date of publication and mention of the grant of the patent: **23.04.2025**
(21) Application number: 20828162.6
(22) Date of filing: 15.12.2020
(51) Int. Cl.: G01Q 60/32, G01Q 70/06, G01Q 30/04

(54) **A METHOD AND SYSTEM FOR PERFORMING SUB-SURFACE MEASUREMENTS ON A SAMPLE**
VERFAHREN UND VORRICHTUNG, UM UNTEROBERFLÄCHEMESSUNGEN AUF EINER PROBE ZU ERLEDIGEN
MÉTHODE ET SYSTÈME POUR OPÉRER DES MESURES SOUS LA SURFACE D'UN ÉCHANTILLON

(30) Priority: 16.12.2019 NL 2024466
(43) Date of publication of application: 26.10.2022
(73) Proprietor: Nearfield Instruments B.V., 3047 AT Rotterdam (NL)
(72) Inventor: ZABBAL, Paul, 3047 AT Rotterdam (NL)
(74) Representative: V.O.
(86) International application number: PCT/NL2020/050789
(87) International publication number: WO 2021/125945

(56) References cited:
- EP-A1- 3 385 725
- CN-A- 104 965 105

## Description

### FIELD OF THE INVENTION

The invention relates to a method and system for performing sub-surface measurements on a sample. The invention further relates to a computer program product.

### BACKGROUND TO THE INVENTION

Scanning probe microscopy (SPM) devices, such as atomic force microscopy (AFM) devices are for example applied in the semiconductor industry for scanning of semiconductor topologies on a surface, for characterization of the semiconductor. Other uses of this technology are found in biomedical industry, nanotechnology, and scientific applications. In particular, AFM may be used for critical dimension metrology (CD-metrology), particle scanning, stress- and roughness measurements. AFM microscopy allows visualization of surfaces at very high accuracy, enabling visualization of surface elements at sub-nanometer resolution. Other surface scanning measurement devices for example include optical near field scanning devices.

The probe in a SPM system comprises a cantilever and a probe tip. On one end of the cantilever, the probe is attached to a sensor head, for example (but not necessarily) through an actuator that allows to bring the probe in motion. Probe tip is usually located on the other end of the cantilever. In SPM, the probe tip can be scanned over the surface of a sample or substrate to measure the topography and mechanical properties thereof. A sensor, in many cases an optical sensor, monitors the position of the probe tip. For example, the sensor may monitor a reflected laser beam that is reflected by the cantilever or the back of the probe tip, and which changes angle when the probe tip moves up or down.

Often, there is a desire to reliably quantify dimensions of a sample, including sub-surface dimensions or features of the sample. It can be challenging to accurately detect sub-surface features in the semiconductor industry. For example, in a sample or substrate with a multi-layer stack (e.g. semiconductor), the signal-to-noise ratio (SNR) may be low as the frequency used is often from GHz up to THz, which can make ultrasound imaging rather difficult. Moreover, the stack mechanical properties are usually unknown. As there could be an opaque layer, optical methods are often limited.

There is a need for detecting sub-surface features using non-destructive evaluation method. The sub-surface features may be buried deep in a structure, for example from a few hundreds of nanometers to micrometers deep. It is desired to accurately be able to extract relevant dimension, which can be used for defect inspection and/or process control.

In this connection it is noted that CN104965105 (A) discloses an AFM probe array integrated with ultrasonic energy transducer. The AFM probe array includes a base which is rectangular in shape; a plurality of micro-cantilevers which are connected with one side edge of the base, and a plurality of ultrasonic energy transducers, wherein each micro-cantilever is provided with a needle tip, the ultrasonic energy transducers are arranged on the back sides of the micro-cantilevers or the back side of the base, and the micro-cantilevers and the ultrasonic energy transducers form the probe array. The probe integrated with the ultrasonic energy transducers renders possible inside imaging of samples.

Also EP3385725 (A1) discloses a method of performing subsurface imaging of embedded structures underneath a substrate surface, using an atomic force microscopy system. The system comprises a probe with a probe tip, and a sensor for sensing a position of the probe tip. The method comprises the steps of: positioning the probe tip relative to the substrate; applying a first acoustic input signal to the substrate; applying a second acoustic input signal to the substrate; detecting an output signal from the substrate in response to the first and second acoustic input signal; and analyzing the output signal. The first acoustic input signal comprises a first signal component and a second signal component, the first signal component comprising a frequency below 250 megahertz and the second signal component either including a frequency below 2.5 megahertz or a frequency such as to provide a difference frequency of at most 2.5 megahertz with the first signal component, such as to enable analysis of an induced stress field in the substrate; and wherein the second acoustic input signal comprises a third signal component having a frequency above 1 gigahertz, such that the return signal includes a scattered fraction of the second acoustic input signal scattered from the embedded structures.

### SUMMARY OF THE INVENTION

It is an object of the invention to provide for a method and a system that obviates at least one of the above mentioned drawbacks.

Additionally or alternatively, it is an object of the invention to provide for a method and system able to more accurately perform sub-surface characterization.

It is an object of the invention to provide for an improved ultrasound sample characterization method, using a scanning probe microscope.

Thereto, the invention according to claim 1 provides for a method for performing sub-surface measurements on a sample using a scanning probe microscopy system, the system comprising a sensor head including an array of probes with a plurality of probes each comprising a cantilever and a probe tip arranged on the cantilever, the method comprising the steps of: moving the array of probes towards a surface of the sample for enabling contact between the probe tips of the array of probes and the surface, performing successive measurements wherein consecutively subsets of cantilevers are vibrated in order to emit a acoustic wave in the sample, and then for each successive emitted acoustic wave a return signal is retrieved by each of the cantilevers, determining a transfer function of the whole array based on the successive measurements, and performing a measurement wherein acoustic signals are concurrently emitted by the cantilevers, wherein the acoustic signals are coordinated based on said transfer function in order to direct a focused non-planar wave towards the one or more identified sub-surface features, and then the return signal retrieved by each of the cantilevers is measured for sub-surface characterization.

By means of the plurality of cantilevers with probe tips, a waveforming technique can be employed. The plurality of cantilevers may be coordinatively vibrated in order to obtain a desired waveform directed towards sub-surface features. In this way, more accurate measurements of sub-surface characteristics of the sample can be performed. Advantageously, the method enables sub-surface characterization with improved SNR.

The probe tips of the array of cantilevers can touch the sample surface and one or more of the probe tips can coordinately emit an acoustic wave within the sample. The return signal can then be measured by the probe tips. The cantilevers of the array can both act as an emitter and receiver. In an example, one cantilever emits an acoustic wave in the sample, and then all the cantilevers are used for measuring the return signal. Then a different subsequent cantilever emits an acoustic wave in the sample, and then again all the cantilevers are used for measuring the return signal. This subsequent firing with each of the cantilevers and measuring the response signal by all the cantilevers can enable determining the transfer function of the whole array. A coupling signal from a sub-surface feature can be measured. The cantilevers can be coordinately actuated based on the transfer function, in order to shape a wavefront which is focused on a sub-surface feature. In this way, the energy used for characterization of the sample can be more focused, providing significant improvements in the SNR. The sub-surface features can thus be better imaged.

In some examples, a source/actuation transducer (e.g. PZT, EMAT, CMUT etc.) or laser can used as an emitter. A first acoustic signal at kHz or MHz level, and a different second acoustic signal at higher frequencies (MHz to THz) may be emitted such that the return signal includes a scattered fraction of the second acoustic input signal scattered from the embedded structures.

The transducer may emit an acoustic wave to the sample, such that the sub-surface features scatter this incoming wave. The cantilever will measure the out-of-plane displacement (movement in the vertical direction) and therefore will be able to obtain the scattering pattern. The tip of the cantilever can act as a point source, and different beamforming techniques can be used to image the sub-surface features.

Optionally, successive measurements are performed wherein consecutively subsets of cantilevers are vibrated in order to emit a plane acoustic wave in the sample.

Optionally, the subset of cantilevers are coordinatively vibrated in order to emit plane acoustic waves in the sample for performing the measurements.

Optionally, the concurrently emitted acoustic signals correspond to the signals reflected by the sub-surface feature.

Optionally, the focused non planar wave is directed towards a single sub-surface feature.

The focusing of the acoustic non-planar wave towards the single sub-surface feature can significantly increase the sub-surface imaging/characterization of said sub-surface feature.

Optionally, the focused non-planar wave is directed towards a plurality of sub-surface features simultaneously.

Even if the wavefront is focused on a plurality of sub-surface features, the SNR can still be improved compared to the case without a focused wavefront.

Optionally, the focused non-planar wave is directed towards a plurality of sub-surface features consecutively.

For each of the plurality of sub-surface features in the sample, a focused non planar wave can be emitted. In this way, each of the plurality of sub-surface features can be better characterized, as the measurements can be separated from each other for each of the plurality of sub-surface features.

Optionally, the data indicative of the acoustic waves emitted during the successive measurements are stored in an emitter matrix, and data indicative of the received return signal by each of the cantilevers is stored in a reception matrix, wherein a transfer matrix is determined based on the emitter matrix and the reception matrix.

Optionally, a singular value decomposition is performed on the transfer matrix for obtaining a set of singular value vectors, wherein the set of singular value vectors are used for increasing the signal-to-noise ratio of the measurement.

For example, dominant proper orthogonal decomposition (POD) modes can be determined to obtain the dominant measurement characteristics.

Optionally, the focused non-planar wave directed towards the one or more identified sub-surface features is determined based on one or more singular value vectors.

Optionally, a conjugated measured signal is emitted back when performing the measurement in order to focus the non-planar wave towards the one or more identified sub-surface features.

Optionally, based on material properties of the sample and the transfer matrix, the focused non-planar wave towards the one or more identified sub-surface features is calculated numerically, preferably based on a cylindrical equation of acoustic wave propagation.

Optionally, one or more singular values are selected for focusing the non-planar wave towards the one or more identified sub-surface features.

Optionally, the array of probes has a larger number of probes than a number of sub-surface features towards which the non-planar wave is focusable during the measurement.

A number of cantilevers of the array can be equal to or higher than a number of sub-surface reflectors within the sample. The sub-surface features within the sample can be seen as reflectors.

Optionally, the array of probes has more than two probes, more preferably more than three, even more preferably more than five probes.

A larger number of probes can result in a more accurate focusing of the wave towards identified sub-surface features. Hence, the characterization of the sample can be significantly improved in this way.

Optionally, the signals used for emitting waves into the sample are coded for increasing the signal-to-noise ratio of the measurement.

Different types of coded signals can be used, for example, chirp linear, exponential, Hadamard, maximum length sequence (MLS), etc., in order to increase the SNR. This can be used for example instead of a Gaussian pulse.

According to claim 14 of the invention, the invention provides for a scanning probe microscopy system for performing sub-surface measurements on a sample, the system including: a sensor head including an array of probes with a plurality of probes each comprising a cantilever and a probe tip arranged on the cantilever, wherein the system further comprises a processor configured for applying a method defined in any one of the previous claims, in particular arranged for: moving the array of probes towards a surface of the sample for enabling contact between the probe tips of the array of probes and the surface, performing successive measurements wherein consecutively subsets of cantilevers are vibrated in order to emit an acoustic wave in the sample, and then for each successive emitted acoustic wave a return signal is retrieved by each of the cantilevers, determining a transfer function of the whole array based on the successive measurements, and performing a measurement wherein acoustic signals are concurrently emitted by the cantilevers, wherein the acoustic signals are coordinated based on said transfer function in order to direct a focused non-planar wave towards the one or more identified sub-surface features, and then the return signal retrieved by each of the cantilevers is measured for sub-surface characterization.

Sub-surface features and/or sublayers can be better detected. Furthermore, the dimensions of sub-surface features or sub-layers of the sample can be better characterized. Even sub-surface features resulting in a low SNR can be characterized effectively using the system according to the invention.

Optionally, the cantilever is actuated with a signal including a first frequency and a second frequency. The first frequency component may be chosen such as to match to the cantilever resonance frequency for probing. The second frequency component may be configured to emit an acoustic wave in the sample, as the tip of the cantilever touches the sample. The reflected wave(s) can be measured by means of the cantilever. The return signal retrieved/received by array of probes 7 can be used for beamforming and directing an ultrasonic wave towards identified sub-surface features (e.g. void, sublayer, etc.).

According to claim 15 of the invention, the invention provides for a computer program product downloadable from a communication network and/or stored on a computer-readable and/or microprocessor-executable medium, comprising program code instructions that, when executed by a scanning probe microscopy system including a processor, causes the system to perform a method according to the invention, the scanning probe microscopy system including a sensor head including an array of probes with a plurality of probes each comprising a cantilever and a probe tip arranged on the cantilever, wherein the method includes the steps of: moving the array of probes towards a surface of the sample for enabling contact between the probe tips of the array of probes and the surface, performing successive measurements wherein consecutively subsets of cantilevers are vibrated in order to emit an acoustic wave in the sample, and then for each successive emitted acoustic wave a return signal is retrieved by each of the cantilevers, determining a transfer function of the whole array based on the successive measurements, and performing a measurement wherein acoustic signals are concurrently emitted by the cantilevers, wherein the acoustic signals are coordinated based on said transfer function in order to direct a focused non-planar wave towards the one or more identified sub-surface features, and then the return signal retrieved by each of the cantilevers is measured for sub-surface characterization.

It will be appreciated that any of the aspects, features and options described in view of the method apply equally to the system and the described computer program product.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of a system;
Fig. 2 shows a schematic diagram of an embodiment of a system;
Fig. 3 shows a schematic diagram of an embodiment of a system not according to the claimed invention;
Fig. 4 shows a schematic diagram of an embodiment of a system;
Fig. 5a, 5b, and 5c show a schematic diagram of measured sub-surface characterizations;
Fig. 6 shows a schematic diagram of an embodiment of performing sub-surface measurements; and
Fig. 7 shows a schematic diagram of a method.

### DETAILED DESCRIPTION

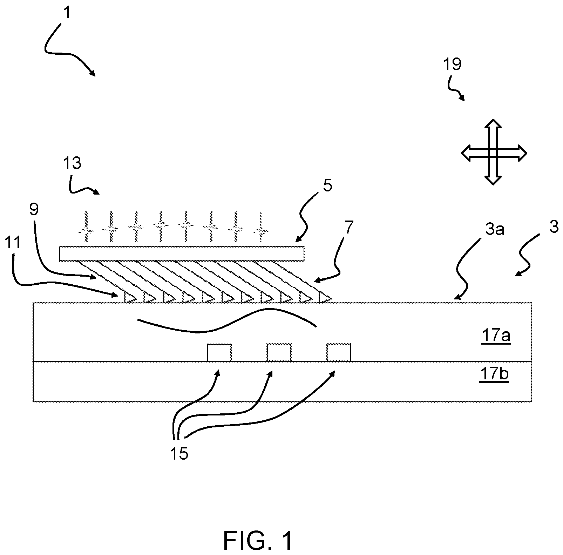

Fig. 1 shows a schematic diagram of an embodiment of a system 1. The system 1 is a scanning probe microscopy system configured to perform sub-surface measurements on a sample 3. The system 1 includes a sensor head 5 including an array of probes 7 with a plurality of probes each comprising a cantilever 9 and a probe tip 11 arranged on the cantilever 9. The system 1 further comprises a processor configured to operate the system 1 for moving the array of probes 7 towards a surface 3a of the sample 3 for enabling contact between the probe tips 11 of the array of probes 7 and the surface 3a; performing successive measurements wherein consecutively subsets of cantilevers are vibrated in order to emit an acoustic wave in the sample, and then for each successive emitted acoustic wave a return signal is retrieved by each of the cantilevers 9; determining a transfer function of the whole array based on the successive measurements; and performing a measurement wherein acoustic signals 13 are concurrently emitted by the cantilevers 9, wherein the acoustic signals 13 are coordinated based on said transfer function in order to direct a focused non-planar wave towards one or more identified sub-surface features 15, and then the return signal retrieved by each of the cantilevers 9 is measured for sub-surface characterization.

In the shown example, the sample is a multi-layer sample including a first layer 17a and a second layer 17b. It will be appreciated that also a single layer sample 3 can be used. It is also possible to use a sample 3 with a larger number of layers.

The sensor head 5 and the sample 3 can be moveable with respect to each other as indicated by arrows 19. The array of probes 7 may be moveable with respect to the sample along a surface 3a therefor for performing multiple measurements at different locations on said surface 3a. It will be appreciated that other relative moving directions are also possible.

In some examples, a set of cantilevers 9 can be placed in a line regularly spaced and separated by a pitch. Optionally, the cantilevers or probes can be arranged in a matrix arrangement (e.g. multi-array). In some examples, the arbitrary waveform is generated with as many channels as the number of cantilevers in the array of probes. For example, an ultrasound piezo/PZT phased arrays may have between 32 up to 256 transducers or probes. However other numbers are also possible, for instance up to thousands of probes (e.g. piezo/PZT transducers). Different excitation mechanisms can be employed for the cantilevers, such as at least one of piezo, photo-thermal, etc. Also many variants of reception systems for the cantilevers can be employed. Examples are piezo-electric (PZT), optical beam deflection (OBD), etc.

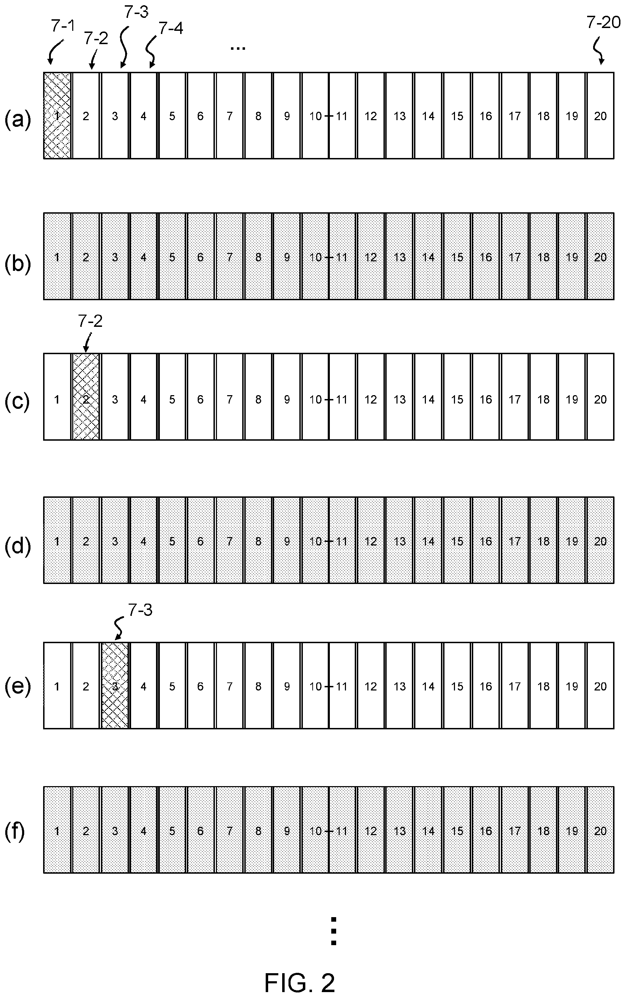

Fig. 2 shows a schematic diagram of an embodiment of a system 1 with a plurality of probes arranged in an array of probes 7. The probes are schematically represented as numbered boxes next to each other. This figure illustrates a measurement technique employed using the array of probes 7, namely different successive steps (a)(-f) are illustrated. In a first step (a), a first probe 7-1 is actuated. The cantilever of the first probe 7-1 is vibrated in order to emit an acoustic wave in the sample. In a subsequent second step (b), a return signal is retrieved by each of the cantilevers 7-1 to 7-20. In a subsequent third step (c), a second probe 7-2 is vibrated in order to emit an acoustic wave in the sample. In a subsequent fourth step (d), a return signal is again retrieved by each of the cantilevers 7-1 to 7-20. In a subsequent fifth step (e), a next probe, third probe 7-3, is vibrated in order to emit an acoustic wave in the sample. In a subsequent sixth step (f), a return signal is again retrieved by each of the cantilevers 7-1 to 7-20. This process can be repeated until all probes 7-1 to 7-20 of the total number of probes have been actuated individually, and a resulting return signal is measured by all the probes 7-1 to 7-20. Although in this example, only a single probe is vibrated at a time during actuation, it is also possible that successive measurements are performed wherein consecutively subsets of cantilevers are vibrated in order to emit an acoustic wave in the sample. Then for each successive emitted acoustic wave emitted by the subset of probes, a return signal can be retrieved by each of the cantilevers 9.

A transfer function of the whole array can be determined based on the successive measurements. Further, a measurement can be performed based on the transfer function. Acoustic signals can be concurrently emitted by the cantilevers 9, wherein the acoustic signals 13 are coordinated based on said transfer function in order to direct a focused non-planar wave towards one or more identified sub-surface features. Then, the return signal retrieved by each of the cantilevers 9 can be measured for sub-surface characterization.

The sub-surface features can be detected by means of a scanning probe microscopy or atomic force microscopy system, based on a time-reversal operator decomposition. The sub-surface features may act as reflectors. A matrix K(m,n,t) can be measured in 3D (m-Emitters*n-Receivers*t-Time). A singular vector decomposition can be performed (after a Fourier Transform): K(m,n,f) = U(f)Σ(f)V(f)*. In this way an increase in the SNR can be obtained, such that it is enabled to better see features in the noise. Furthermore, it may not be necessary to know material properties of the sample being characterized.

In this example, the array of probes 7 includes a total number of twenty probes 7-1 to 7-20 arranged next to each other. However, a different number of probes may also be arranged in accordance with the invention.

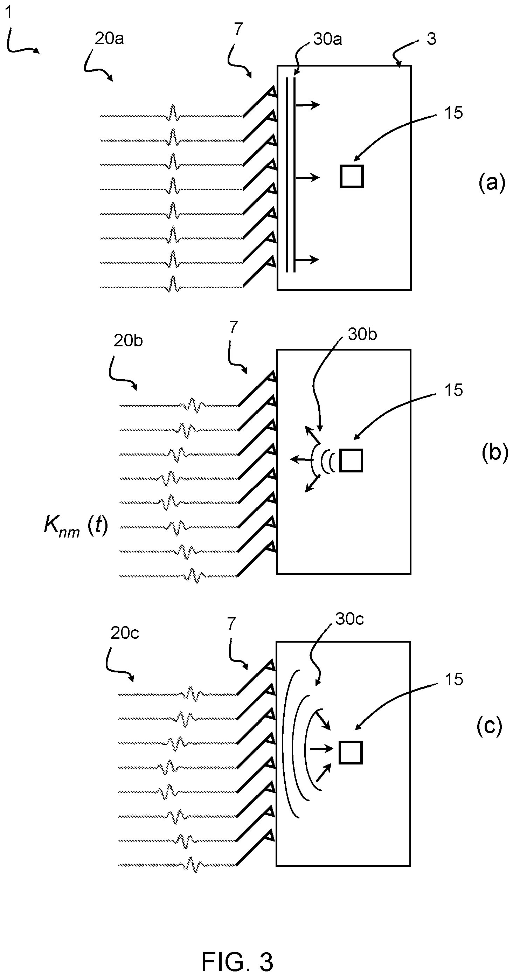

Fig. 3 shows a schematic diagram of a system 1 not according to the presently claimed invention, which includes an array of probes 7. Different steps (a)-(c) are shown. In a first step (a), a plane wave E⁰(f) is emitted by means of the array of probes 7. The plane wave propagates within the sample. In a second step (b), a return signal is measured, S⁰(f) = K(f)E°(f), wherein E corresponds to an Emitter Matrix, S corresponds to a reception matrix, and K corresponds to a transfer matrix. In a third step (c), retro-propagation is performed E¹(f) = K*(f)E⁰*(f). As the time-reversal operator corresponds to a phase conjugation, it is possible to emit back the conjugated measured signal in order to focus on the reflector. A rank of K corresponds to a number of reflectors (sub-surface features), in the above case only 1. Meaning the first singular vector (λ) corresponds to the signals coming from the sub-surface feature, the other singular vectors correspond to the noise sub-space.

In the third step (c), the acoustic signals are coordinated based on said transfer function in order to direct a focused non-planar wave towards the one or more identified sub-surface features, and then the return signal retrieved by each of the cantilevers is measured for sub-surface characterization. The sub-surface characterization of the sub-surface feature 15 can be significantly enhanced in this way. The resulting image has an improved SNR.

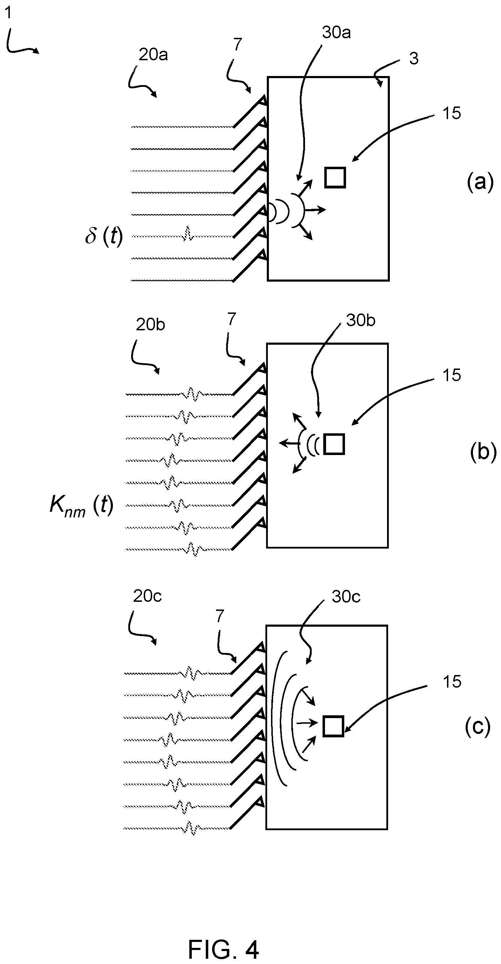

Fig. 4 shows a schematic diagram of an embodiment of a system 1. In this example, the measurement is performed in 3 steps (a)-(c), based on the study of the time-reversal operator K(f).

Other signals can be used for the measurement of the transfer matrix K. For example, this can be performed similar to a synthetic transmit aperture (STA) method. In this method, multiple sequences of sources are used to image a reflector. An 'intensity map' can be built which roughly consists to the sum of the difference signals/position. However, the main issue of this conventional method is that all signals are added together, so if the SNR is small, the noise contribution is added and can compromise the detection of the sub-surface feature. Overall a low SNR can be the result, and features close to each other can be hard to distinguish. Advantageously, according to the invention, it is possible to focus on the singular values for imaging and/or for refocusing.

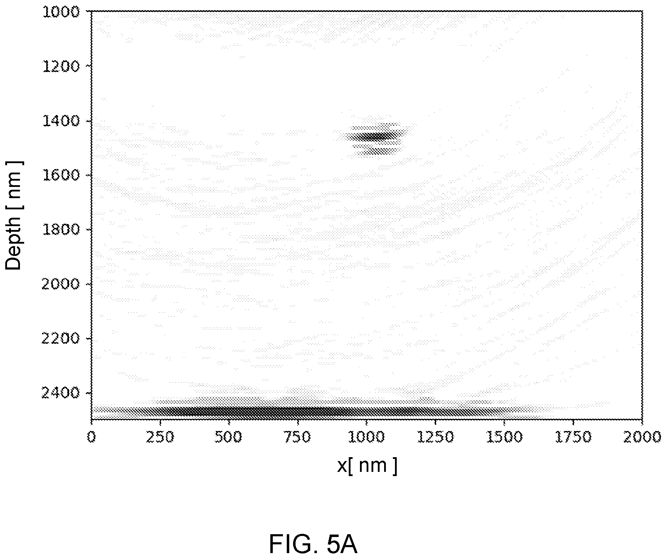

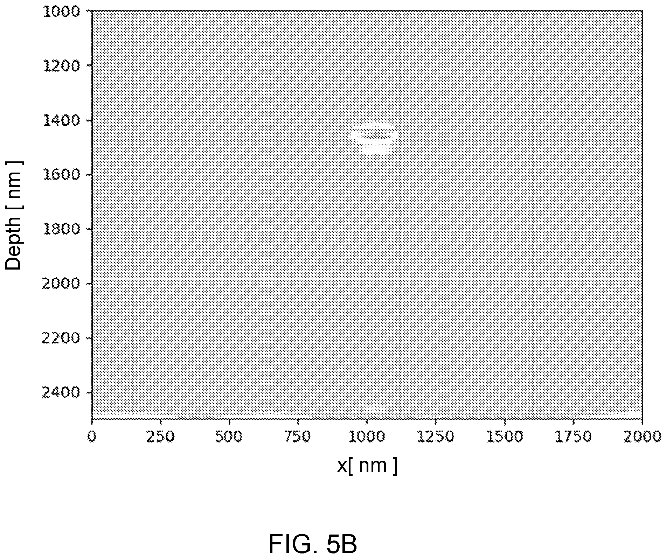

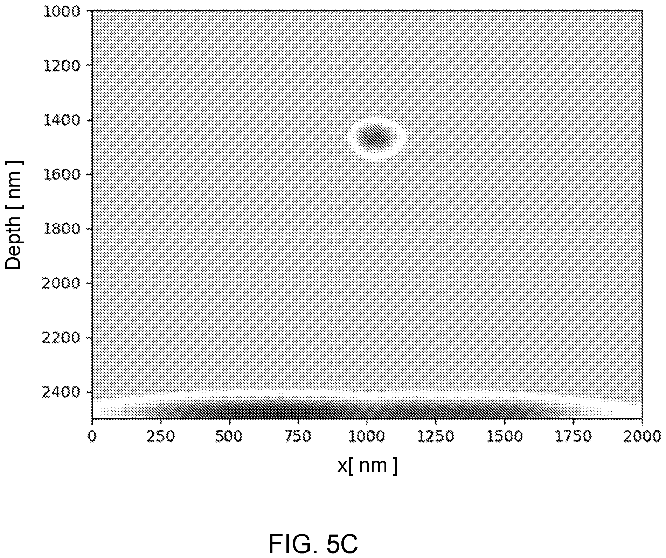

Fig. 5a, 5b, and 5c show a schematic diagram of measured sub-surface characterizations, more particularly amplitude A intensity maps measured by the plurality of the cantilevers of the array of probes 7. Fig. 5a shows an image obtained by employing the conventional synthetic transmit aperture method. Fig. 5b shows a first singular vector with the highest amount of energy. Fig. 5c shows an image obtained by re-emitting the first singular vector for imaging the sub-surface feature. For this purpose, the acoustic signals are concurrently emitted by the cantilevers of the array of probes 7, wherein the acoustic signals are coordinated based on the transfer function in order to direct a focused non-planar wave towards the one or more identified sub-surface features. The return signal retrieved by each of the cantilevers is then measured for the improved sub-surface characterization.

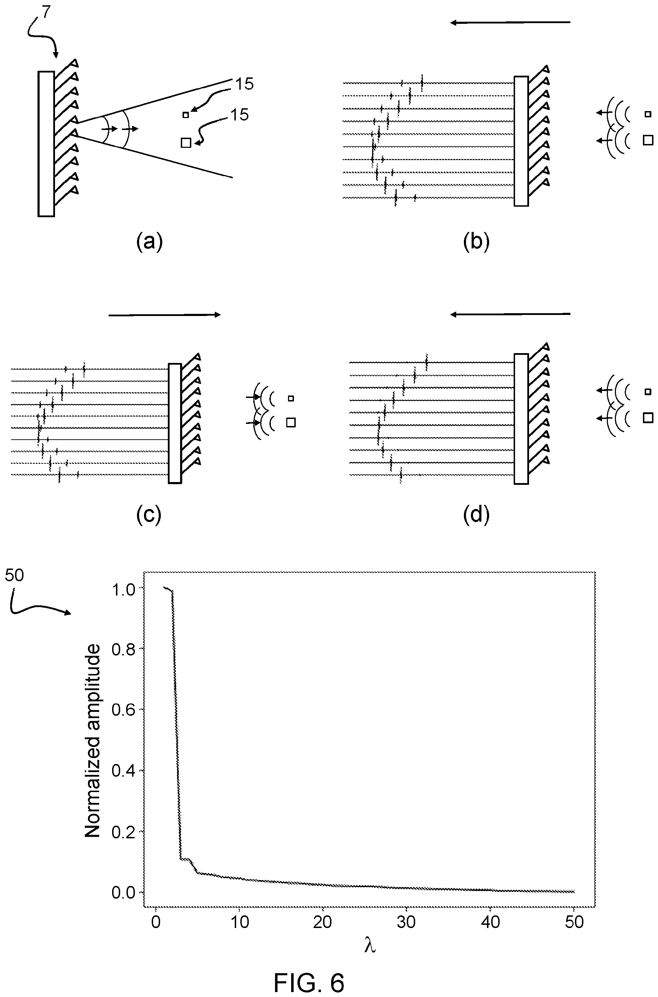

Fig. 6 shows a schematic diagram of an embodiment of performing sub-surface measurements. In some examples, coded signals (chirp linear, exponential, Hadamard, MLS, etc.) are used to increase the SNR, for example instead of Gaussian Pulse. In some examples, a number of cantilevers is chosen to be higher than a number of reflectors. The number of reflectors can for instance be based on a prediction, a worst-case scenario, etc. In the shown example, two singular vectors are obtained as there are two reflectors. An eigenvalue distribution with two sub-surface features is shown in graph 50.

In some examples, an iterative time-reversal mode can be employed. In a first step (a), a first transmitted wave can illuminate a sector containing for example two targets within the sample, i.e. sub-surface features. In subsequent step (b), reflected waves can be recorded on the array of probes 7. Further, in step (c), the retrieved data can be time-reversed and reemitted back. The time-reversed wave fronts enable refocusing on the two targets. The highest amplitude wavefront can illuminate the most reflective target, while the weakest wavefront can illuminate the second target. In step (d), the new reflected wave fronts are recorded before another time reversal is carried out. The weakest target can be illuminated more weakly and reflect a wavefront much fainter than the one coming from the strongest target. After some iterations the process can converge and produce a wavefront focused on the most reflective target. In this way, sub-surface characterization using the scanning probe microscope with the array of probes 7 can be significantly enhanced.

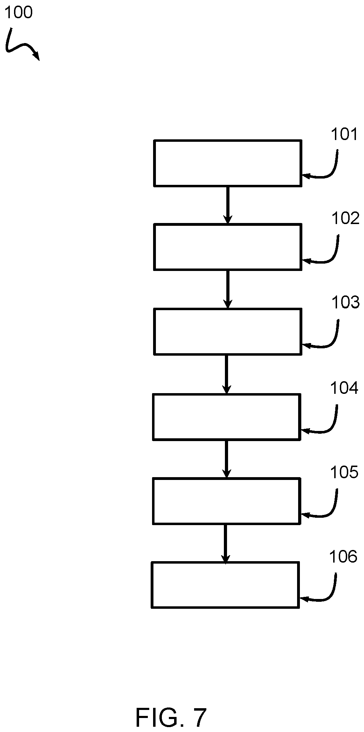

Fig. 7 shows a schematic diagram of a method 100 for performing sub-surface measurements on a sample using a scanning probe microscopy system. The system comprises a sensor head including an array of probes with a plurality of probes each comprising a cantilever and a probe tip arranged on the cantilever. In a first step 101 of the method, the array of probes is moved towards a surface of the sample for enabling contact between the probe tips of the array of probes and the surface. In a second step 102, successive measurements are performed wherein consecutively subsets of cantilevers are vibrated in order to emit an acoustic wave in the sample. Then, in a third step 103, for each successive emitted acoustic wave a return signal is retrieved by each of the cantilevers. In a fourth step 104, a transfer function of the whole array is determined based on the successive measurements. In a fifth step 105, a measurement is performed wherein acoustic signals are concurrently emitted by the cantilevers, wherein the acoustic signals are coordinated based on said transfer function in order to direct a focused non-planar wave towards the one or more identified sub-surface features. Then, in a sixth step 106, the return signal retrieved by each of the cantilevers is measured for sub-surface characterization.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to an advantage.

## Claims

1. A method (100) for performing sub-surface measurements on a sample (3) using a scanning probe microscopy system (1), the system comprising
a sensor head (5) including an array of probes (7) with a plurality of probes each comprising a cantilever (9) and a probe tip (11) arranged on the cantilever, the method comprising the steps of:
moving (101) the array of probes towards a surface (3a) of the sample for enabling contact between the probe tips of the array of probes and the surface, **characterized in that** the method further comprises the steps of:
performing (102) successive measurements wherein consecutively subsets of cantilevers are vibrated in order to emit an acoustic wave in the sample, and then for each successive emitted acoustic wave a return signal is retrieved (103) by each of the cantilevers,
determining (104) a transfer function of the whole array based on the successive measurements, and
performing (105) a measurement wherein acoustic signals (13) are concurrently emitted by the cantilevers, wherein the acoustic signals are coordinated based on said transfer function in order to direct a focused non-planar wave towards the one or more identified sub-surface features (15), and then the return signal retrieved by each of the cantilevers is measured for sub-surface characterization.

2. Method according to claim 1, wherein the focused non planar wave is directed towards a single sub-surface feature (15).

3. Method according to claim 1, wherein the focused non-planar wave is directed towards a plurality of sub-surface features (15) simultaneously.

4. Method according to claim 1, wherein the focused non-planar wave is directed towards a plurality of sub-surface features (15) consecutively.

5. Method according to any one of the preceding claims, wherein data indicative of the acoustic waves emitted during the successive measurements are stored in an emitter matrix (E), and data indicative of the received return signal by each of the cantilevers is stored in a reception matrix (S), wherein a transfer matrix (K) is determined based on the emitter matrix (E) and the reception matrix (S).

6. Method according to any one of the preceding claims, wherein a singular value decomposition is performed on the transfer matrix (K) for obtaining a set of singular value vectors, wherein the set of singular value vectors are used for increasing the signal-to-noise ratio of the measurement.

7. Method according to any one of the preceding claims, wherein the focused non-planar wave directed towards the one or more identified sub-surface features (15) is determined based on one or more singular value vectors.

8. Method according to any one of the preceding claims, wherein a conjugated measured signal is emitted back when performing the measurement in order to focus the non-planar wave towards the one or more identified sub-surface features (15).

9. Method according to any one of the preceding claims, wherein based on material properties of the sample (3) and the transfer matrix (K), the focused non-planar wave towards the one or more identified sub-surface features (15) is calculated numerically, preferably based on a cylindrical equation of acoustic wave propagation.

10. Method according to any one of the preceding claims, wherein one or more singular values are selected for focusing the non-planar wave towards the one or more identified sub-surface features (15).

11. Method according to any one of the preceding claims, wherein the array of probes (7) has a larger number of probes than a number of sub-surface features (15) towards which the non-planar wave is focusable during the measurement.

12. Method according to any one of the preceding claims, wherein the array of probes (7) has more than two probes, more preferably more than three, even more preferably more than five probes.

13. Method according to any one of the preceding claims, wherein signals used for emitting waves into the sample (3) are coded for increasing the signal-to-noise ratio of the measurement.

14. A scanning probe microscopy system (1) for performing sub-surface measurements on a sample (3), the system including:
a sensor head (5) including an array of probes (7) with a plurality of probes each comprising a cantilever (9) and a probe tip (11) arranged on the cantilever,
wherein the system further comprises a processor configured for applying a method defined in any one of the previous claims, wherein the processor is arranged for:
moving (101) the array of probes (7) towards a surface (3s) of the sample (3) for enabling contact between the probe tips of the array of probes and the surface,
performing (102) successive measurements wherein consecutively subsets of cantilevers are vibrated in order to emit an acoustic wave in the sample, and then for each successive emitted acoustic wave a return signal is retrieved (103) by each of the cantilevers,
determining (104) a transfer function of the whole array based on the successive measurements, and
performing (105) a measurement wherein acoustic signals (13) are concurrently emitted by the cantilevers, wherein the acoustic signals are coordinated based on said transfer function in order to direct a focused non-planar wave towards the one or more identified sub-surface features (15), and then the return signal retrieved by each of the cantilevers is measured for sub-surface characterization.

15. A computer program product downloadable from a communication network and/or stored on a computer-readable and/or microprocessor-executable medium, comprising program code instructions that, when executed by a scanning probe microscopy system (1) including a processor, causes the system to perform a method according to any one of the preceding claims 1-13, the scanning probe microscopy system including a sensor head (5) including an array of probes (7) with a plurality of probes each comprising a cantilever (9) and a probe tip (11) arranged on the cantilever.

## Patentansprüche

1. Verfahren (100) zum Erledigen von Unteroberflächenmessungen auf einer Probe (3) unter Verwendung einer Rastersondenmikroskopievorrichtung (1), wobei die Vorrichtung
einen Sensorkopf (5) umfasst, der eine Anordnung von Sonden (7) mit einer Vielzahl von Sonden einschließt, wobei jede einen Ausleger (9) und eine auf dem Ausleger angeordnete Sondenspitze (11) umfasst, wobei das Verfahren die folgenden Schritte umfasst:
Bewegen (101) der Anordnung von Sonden in Richtung einer Oberfläche (3a) der Probe, um einen Kontakt zwischen den Sondenspitzen der Anordnung von Sonden und der Oberfläche zu ermöglichen,
**dadurch gekennzeichnet, dass** das Verfahren ferner die folgenden Schritte umfasst:
Erledigen (102) aufeinanderfolgender Messungen, wobei nacheinander Teilmengen von Auslegern in Schwingung versetzt werden, um eine akustische Welle in der Probe zu erzeugen, und dann für jede aufeinanderfolgend erzeugte akustische Welle ein Rücksignal von jedem der Ausleger abgerufen (103) wird,
Bestimmen (104) einer Übertragungsfunktion der gesamten Anordnung auf der Grundlage der aufeinanderfolgenden Messungen und
Erledigen (105) einer Messung, wobei akustische Signale (13) gleichzeitig von den Auslegern ausgesendet werden, wobei die akustischen Signale auf der Grundlage der Übertragungsfunktion koordiniert werden, um eine fokussierte nicht-ebene Welle auf das eine oder die mehreren identifizierten Unteroberflächenmerkmale (15) zu richten, und dann das von jedem der Ausleger abgerufene Rücksignal zur Kennzeichnung der Unteroberfläche gemessen wird.

2. Verfahren nach Anspruch 1, wobei die fokussierte nicht-ebene Welle auf ein einzelnes Unteroberflächenmerkmal (15) gerichtet ist.

3. Verfahren nach Anspruch 1, wobei die fokussierte nicht-ebene Welle gleichzeitig auf eine Vielzahl von Unteroberflächenmerkmalen (15) gerichtet ist.

4. Verfahren nach Anspruch 1, wobei die fokussierte nicht-ebene Welle nacheinander auf eine Vielzahl von Unteroberflächenmerkmalen (15) gerichtet ist.

5. Verfahren nach einem der vorstehenden Ansprüche, wobei Daten, die auf die während der aufeinanderfolgenden Messungen ausgesendeten Schallwellen hinweisen, in einer Sendermatrix (E) gespeichert werden und Daten, die auf das von jedem der Ausleger empfangene Rücksignal hinweisen, in einer Empfangsmatrix (S) gespeichert werden, wobei eine Übertragungsmatrix (K) auf der Grundlage der Sendermatrix (E) und der Empfangsmatrix (S) bestimmt wird.

6. Verfahren nach einem der vorstehenden Ansprüche, wobei eine Singulärwertzerlegung an der Übertragungsmatrix (K) zum Erhalten eines Satzes von Singulärwertvektoren durchgeführt wird, wobei der Satz von Singulärwertvektoren zum Erhöhen des Signal-Rausch-Verhältnisses der Messung verwendet wird.

7. Verfahren nach einem der vorstehenden Ansprüche, wobei die fokussierte nicht-ebene Welle, die auf das eine oder die mehreren identifizierten Unteroberflächenmerkmale (15) gerichtet ist, auf der Grundlage eines oder mehrerer Singulärwertvektoren bestimmt wird.

8. Verfahren nach einem der vorstehenden Ansprüche, wobei ein konjugiertes gemessenes Signal zurückgesendet wird, während die Messung erledigt wird, um die nicht-ebene Welle auf ein oder mehrere identifizierte Unteroberflächenmerkmale (15) zu fokussieren.

9. Verfahren nach einem der vorstehenden Ansprüche, wobei auf der Grundlage der Materialeigenschaften der Probe (3) und der Übertragungsmatrix (K) die fokussierte nicht-ebene Welle in Richtung des einen oder der mehreren identifizierten Unteroberflächenmerkmale (15) numerisch berechnet wird, vorzugsweise auf der Grundlage einer Zylindergleichung der Schallwellenausbreitung.

10. Verfahren nach einem der vorstehenden Ansprüche, wobei ein oder mehrere Singulärwerte ausgewählt werden, um die nicht-ebene Welle auf das eine oder die mehreren identifizierten Unteroberflächenmerkmale (15) zu fokussieren.

11. Verfahren nach einem der vorstehenden Ansprüche, wobei die Anordnung von Sonden (7) eine größere Anzahl von Sonden aufweist als eine Anzahl von Unteroberflächenmerkmalen (15), auf welche die nicht-ebene Welle während der Messung fokussierbar ist.

12. Verfahren nach einem der vorstehenden Ansprüche, wobei die Anordnung von Sonden (7) mehr als zwei Sonden, stärker bevorzugt mehr als drei, noch stärker bevorzugt mehr als fünf Sonden aufweist.

13. Verfahren nach einem der vorstehenden Ansprüche, wobei die zum Aussenden von Wellen in die Probe (3) verwendeten Signale zur Erhöhung des Signal-Rausch-Verhältnisses der Messung codiert werden.

14. Rastersondenmikroskopie-Vorrichtung (1) zum Erledigen von Unteroberflächenmessungen auf einer Probe (3), wobei die Vorrichtung einschließt:
einen Sensorkopf (5), der eine Anordnung von Sonden (7) mit einer Vielzahl von Sonden einschließt, wobei jede einen Ausleger (9) und eine auf dem Ausleger angeordnete Sondenspitze (11) umfasst,
wobei die Vorrichtung ferner einen Prozessor umfasst, der zum Anwenden eines in einem der vorstehenden Ansprüche definierten Verfahrens konfiguriert ist, wobei der Prozessor angeordnet ist, zum:
Bewegen (101) der Anordnung von Sonden (7) in Richtung einer Oberfläche (3s) der Probe (3), um einen Kontakt zwischen den Sondenspitzen der Anordnung von Sonden und der Oberfläche zu ermöglichen,
Erledigen (102) aufeinanderfolgender Messungen, wobei nacheinander Teilmengen von Auslegern in Schwingung versetzt werden, um eine akustische Welle in der Probe zu erzeugen, und dann für jede aufeinanderfolgend erzeugte akustische Welle ein Rücksignal von jedem der Ausleger abgerufen (103) wird,
Bestimmen (104) einer Übertragungsfunktion der gesamten Anordnung auf der Grundlage der aufeinanderfolgenden Messungen und
Erledigen (105) einer Messung, wobei akustische Signale (13) gleichzeitig von den Auslegern ausgesendet werden, wobei die akustischen Signale auf der Grundlage der Übertragungsfunktion koordiniert werden, um eine fokussierte nicht-ebene Welle auf das eine oder die mehreren identifizierten Unteroberflächenmerkmale (15) zu richten, und dann das von jedem der Ausleger abgerufene Rücksignal zur Kennzeichnung der Unteroberfläche gemessen wird.

15. Computerprogrammprodukt, das aus einem Kommunikationsnetz heruntergeladen werden kann und/oder auf einem computerlesbaren und/oder mikroprozessorausführbaren Medium gespeichert ist, umfassend Programmcodeanweisungen, die bei Ausführung durch eine Rastersondenmikroskopie-Vorrichtung (1), einschließlich eines Prozessors, die Vorrichtung veranlassen, ein Verfahren nach einem der einem der vorstehenden Ansprüche 1 bis 13 auszuführen, wobei die Rastersondenmikroskopie-Vorrichtung einen Sensorkopf (5) einschließt, der eine Anordnung von Sonden (7) mit einer Vielzahl von Sonden einschließt, wobei jede einen Ausleger (9) und eine auf dem Ausleger angeordnete Sondenspitze (11) umfasst.

## Revendications

1. Méthode (100) pour réaliser des mesures de sous-surface sur un échantillon (3) en utilisant un système de microscopie à sondes locales (1), le système comprenant
une tête de capteur (5) comportant un réseau de sondes (7) avec une pluralité de sondes comprenant chacune un cantilever (9) et une pointe de sonde (11) agencée sur le cantilever, la méthode comprenant les étapes consistant à :
déplacer (101) le réseau de sondes vers une surface (3a) de l'échantillon pour permettre un contact entre les pointes de sondes du réseau de sondes et la surface,
**caractérisée en ce que** la méthode comprend en outre les étapes consistant à :
réaliser (102) des mesures successives dans lesquelles des sous-ensembles de cantilevers sont consécutivement mis en vibration afin d'émettre une onde acoustique dans l'échantillon, puis pour chaque onde acoustique émise successive un signal de retour est récupéré (103) par chacun des cantilevers,
déterminer (104) une fonction de transfert de la totalité du réseau sur la base des mesures successives, et
réaliser (105) une mesure dans laquelle des signaux acoustiques (13) sont émis en même temps par les cantilevers, dans laquelle les signaux acoustiques sont coordonnés sur la base de ladite fonction de transfert afin de diriger une onde non plane focalisée vers les une ou plusieurs caractéristiques de sous-surface (15) identifiées, puis le signal de retour récupéré par chacun des cantilevers est mesuré pour une caractérisation de sous-surface.

2. Méthode selon la revendication 1, dans laquelle l'onde non plane focalisée est dirigée vers une seule caractéristique de sous-surface (15).

3. Méthode selon la revendication 1, dans laquelle l'onde non plane focalisée est dirigée vers une pluralité de caractéristiques de sous-surface (15) simultanément.

4. Méthode selon la revendication 1, dans laquelle l'onde non plane focalisée est dirigée vers une pluralité de caractéristiques de sous-surface (15) consécutivement.

5. Méthode selon l'une quelconque des revendications précédentes, dans laquelle des données indicatives des ondes acoustiques émises pendant les mesures successives sont stockées dans une matrice d'émetteur (E), et des données indicatives du signal de retour reçu par chacun des cantilevers sont stockées dans une matrice de réception (S), dans laquelle une matrice de transfert (K) est déterminée sur la base de la matrice d'émetteur (E) et de la matrice de réception (S).

6. Méthode selon l'une quelconque des revendications précédentes, dans laquelle une décomposition en valeurs singulières est réalisée sur la matrice de transfert (K) pour obtenir un ensemble de vecteurs de valeurs singulières, dans laquelle l'ensemble de vecteurs de valeurs singulières est utilisé pour augmenter le rapport signal sur bruit de la mesure.

7. Méthode selon l'une quelconque des revendications précédentes, dans laquelle l'onde non plane focalisée dirigée vers les une ou plusieurs caractéristiques de sous-surface (15) identifiées est déterminée sur la base d'un ou plusieurs vecteurs de valeurs singulières.

8. Méthode selon l'une quelconque des revendications précédentes, dans laquelle un signal mesuré conjugué est réémis lors de la réalisation de la mesure afin de focaliser l'onde non plane vers les une ou plusieurs caractéristiques de sous-surface (15) identifiées.

9. Méthode selon l'une quelconque des revendications précédentes, dans laquelle, sur la base de propriétés de matériaux de l'échantillon (3) et de la matrice de transfert (K), l'onde non plane focalisée vers les une ou plusieurs caractéristiques de sous-surface (15) identifiées est calculée numériquement, de préférence sur la base d'une équation cylindrique de propagation d'onde acoustique.

10. Méthode selon l'une quelconque des revendications précédentes, dans laquelle une ou plusieurs valeurs singulières sont sélectionnées pour focaliser l'onde non plane vers les une ou plusieurs caractéristiques de sous-surface (15) identifiées.

11. Méthode selon l'une quelconque des revendications précédentes, dans laquelle le réseau de sondes (7) a un nombre de sondes supérieur à un nombre de caractéristiques de sous-surface (15) vers lesquelles l'onde non plane est focalisable pendant la mesure.

12. Méthode selon l'une quelconque des revendications précédentes, dans laquelle le réseau de sondes (7) a plus de deux sondes, de manière davantage préférée plus de trois, encore plus préférentiellement plus de cinq sondes.

13. Méthode selon l'une quelconque des revendications précédentes, dans laquelle des signaux utilisés pour émettre des ondes dans l'échantillon (3) sont codés pour augmenter le rapport signal sur bruit de la mesure.

14. Système de microscopie à sondes locales (1) pour réaliser des mesures de sous-surface sur un échantillon (3), le système comportant :
une tête de capteur (5) comportant un réseau de sondes (7) avec une pluralité de sondes comprenant chacune un cantilever (9) et une pointe de sonde (11) agencée sur le cantilever,
dans lequel le système comprend en outre un processeur configuré pour appliquer une méthode définie dans l'une quelconque des revendications précédentes, dans lequel le processeur est agencé pour :
déplacer (101) le réseau de sondes (7) vers une surface (3s) de l'échantillon (3) pour permettre un contact entre les pointes de sondes du réseau de sondes et la surface,
réaliser (102) des mesures successives dans lesquelles des sous-ensembles de cantilevers sont consécutivement mis en vibration afin d'émettre une onde acoustique dans l'échantillon, puis pour chaque onde acoustique émise successive un signal de retour est récupéré (103) par chacun des cantilevers,
déterminer (104) une fonction de transfert de la totalité du réseau sur la base des mesures successives, et
réaliser (105) une mesure dans laquelle des signaux acoustiques (13) sont émis en même temps par les cantilevers, dans lequel les signaux acoustiques sont coordonnés sur la base de ladite fonction de transfert afin de diriger une onde non plane focalisée vers les une ou plusieurs caractéristiques de sous-surface (15) identifiées, puis le signal de retour récupéré par chacun des cantilevers est mesuré pour une caractérisation de sous-surface.

15. Produit programme d'ordinateur téléchargeable à partir d'un réseau de communication et/ou stocké sur un support lisible par ordinateur et/ou exécutable par microprocesseur, comprenant des instructions de code de programme qui, lorsqu'elles sont exécutées par un système de microscopie à sondes locales (1) comportant un processeur, amènent le système à réaliser une méthode selon l'une quelconque des revendications 1 à 13 précédentes, le système de microscopie à sondes locales comportant une tête de capteur (5) comportant un réseau de sondes (7) avec une pluralité de sondes comprenant chacune un cantilever (9) et une pointe de sonde (11) agencée sur le cantilever.
